(19) Europäisches Patentamt
European Patent Office
Office européen des brevets

(11) **EP 2 544 128 A1**

(12) **EUROPEAN PATENT APPLICATION**
published in accordance with Art. 153(4) EPC

(43) Date of publication:
**09.01.2013 Bulletin 2013/02**

(51) Int Cl.:
**G06K 19/06** *(2006.01)* **G06K 1/12** *(2006.01)*
**G06K 7/10** *(2006.01)* **G06K 7/12** *(2006.01)*

(21) Application number: **11750714.5**

(22) Date of filing: **02.03.2011**

(86) International application number:
**PCT/JP2011/054794**

(87) International publication number:
**WO 2011/108605 (09.09.2011 Gazette 2011/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.03.2010 JP 2010049219**

(71) Applicant: **Colour Code Technologies Co., Ltd. Tokyo 104-0033 (JP)**

(72) Inventors:
• **TAKURA, Yoshiyuki Tokyo 104-0033 (JP)**

• **ICHINOSE, Kenji Tokyo 104-0033 (JP)**
• **MIWA, Tatahiro Tokyo 104-0033 (JP)**

(74) Representative: **Isarpatent Patent- und Rechtsanwälte Friedrichstrasse 31 80801 München (DE)**

(54) **METHOD FOR CREATING AND METHOD FOR DECODING TWO-DIMENSIONAL COLOUR CODE**

(57) In order to obtain a multicolor and reduced cell for recoding electronic data into two-dimensional color code with high density, needed are a guide code portion having a code system easy to read and decode and a data record code portion having a code system enabling high-precision record. By reading and decoding the guide code portion with an image receiving apparatus, the position of the date record code portion is judged and decoded. Through obtaining numerical information including the number of cells, for example, the position of measurement pixels used for judgment of the color of each cell of the data record code portion can be judged with high precision for a short period of time. In addition, when there is decoding error, the error is revised through displacement of the position of the measurement pixels. No judgment is made by confrontation between whether the each cell has a color belonging to what used colors and the reference colors displayed around the two-dimensional code. Through quantization of the colors of the pixels in the cell into used colors, record density can be heightened while maintaining the precision of discrimination of the cell color.

[Figure 1]

Figure 1 [Fundamental mode of printed two-dimensional color code]

## Description

[Technical Field]

The present invention relates to a two-dimensional color code capable of retaining electronic data.

[Background Art]

"Delimitation of Black and White"

Various methods of converting electronic data into information codes and of records on a code display medium using the information codes and decoding the records have heretofore been advocated. For example, some of one-dimensional or two-dimensional bar codes recording information in a black and white pattern have been proposed. However, since a bar code that records information in a black and white pattern has a low data recording density per display area, it cannot handle electronic data, such as documents, images, voice, etc. having bulky data.

"Necessity of Color and Delimitation of its Read Precision"

In vie15w of the above, various two-dimensional color code systems used in a display medium to aim at the enhancement of the data record density per area have been advocated. In the case of converting bit sequences of electronic data to be encoded into those with colors, an increase in number of colors of red and blue in addition to two colors of black and white to be used (hereinafter referred to as the "used colors") can increase a bit number expressed by a one block (hereinafter referred to as the cell) and enhance the data record density.

"Difficulty in Judgment of Color based on Color Change"

However, since a two-dimensional color code is easier to induce misjudgment of the color of the cell, by the increment of the number of colors used (hereinafter referred to as the "used colors"), resulting from color change (hereinafter referred to as the "discoloration") based on discoloration causes including discoloration fading, print irregularity, illumination light and blots, it is lower in decoding precision than a two-dimensional black-and-white code.

"Difficulty in Judgment of Color toward Multicolor"

Since judgment of the region of a two-dimensional color code displayed or the color of each cell generally utilizes color information of the image receiving pixels obtained with an image receiving apparatus, the larger the difference in the used colors (color difference), the easier the discrimination is. On the other hand, the more multicolor the color tends to be, the narrower the regions the respective used colors have (color regions in which colors are judged as the used colors) are. That is to say, even in the presence of the discoloration resulting from discoloration fading, print irregularity, illumination light and blots, since the color regions that can be discriminated as the originally used colors become narrow, the color of the cell is apt to be falsely recognized as a different color from the original color. Therefore, when the number of the used colors is increased in order to enhance the recording density, the color false-recognition ratio comes to be high.

"Difficulty in Color Mixing in Color Boundary Region and in Reduction of Cell Size"

The image receiving apparatus used for decoding the code displayed on an image code display medium converts the wavelengths of colors received by each sensor of the image receiving apparatus into information (color information of image receiving pixels) treatable on an electronic medium, such as RGB values, for example. However, since the wavelengths having the wavelengths of the adjacent respective colors mixed in the neighborhood of the boundaries of the colors constitute the color information of the image receiving pixels, colors different from the original colors of the cells are apt to be received in the neighborhood of the boundaries of the colors. Since the smaller the cell size, the closer the cell boundaries are, the ratio of the sensor region capable of receiving the wavelengths of the original colors of the cells becomes reduced. For this reason, the reduction of the cell size makes it further difficult to receive the same color information of the image receiving pixels as the original color information allotted to the cell.

"Delimitation of Conventional Methods"

In the conventional two-dimensional color code, the judging method of the cell boundary line or color depending on the image analysis including the color ingredient analysis uses the color information of the image receiving pixels obtained with the image receiving apparatus as basic information for analysis. Since these pieces of information include color mixing in the neighborhood of the color boundaries and color information in which colors per se are easily changed by the effects of discoloration fading, print irregularity, illumination light and blots, particularly a great number of colors lead to further ease of misjudgment. For this reason, a large color difference and a large cell size of a degree not so affected by the color change are needed. Therefore, the enhancement of record efficiency through the increase of the color number or cell reduction has its own limits because it is in principle difficult to maintain the practicable decoding precision. Actually under practical environments, a combination of the limited color number (5 at most including black and white and three colors) and a large cell size (least 0.5 mm, for example) is only used to maintain the decoding precision and, as a result, the record density is low.

In addition, in the conventional method, a most case includes the steps of displaying all colors used in a two-dimensional color code region as reference colors (a synonym for color bars) and comparing the color ingredients of the pixels read with the color ingredients of the used colors read to thereby judge the used colors of the pixels. In this case, problems are imposed, that include a problem of requiring preparation of a large space for reference colors in a two-dimensional color code region so as to accurately read the reference colors with high precision, a problem in that an increase in number of the used colors makes the color difference small to readily induce read errors only with the optical method and a problem in that the contaminated and discolored reference color regions cannot serve as the reference colors. Therefore, in the method comprising using a large number of used colors in order to heighten the record density in a color code, displaying the used colors in color code regions as reference colors, comparing the used colors with the colors of cells in a data record code and discriminating the used colors, the number of colors has its own limits and high record density cannot be realized under the practicable environments.

"Conventionally Developed Techniques and Related Documents"

Though various methods to solve the above problems have been advocated, a two-dimensional color code capable of recording with high density and decoding with high precision a great deal of electronic data including documents, images and voices has not yet been developed. Conventionally, except for Patent Document 3, in order to raise the read decoding precision, various measures have been tried, with importance given to cell characteristics, i.e. shape, arrangement, outlining, color and color combination and studies on that a two-dimensional color code of what shape and what color should be displayed have been made. Furthermore, the method for directly displaying the reference colors on the color codes has not been eliminated.

In view of the technical background described above, the present invention has been adopted an epoch-making creation that has never been conventionally adopted, has tried the conventional measures on the cell characteristics, has devised a treatment of image receiving pixel data per se from a two-dimensional color code and does not display the reference colors. As a result, the present invention has enabled the read decode precision to be maintained and succeeded in shortness of the read time even when the record density has been enhanced through an increase in number of the used colors and reduction of the cell size.

[Prior Art Documents]

[Patent Documents]

[Patent Document 1] Japanese Patent No. 3996520 (DENSO WAVE INCORPORATED, Claims 1-5) that relates to one method for cell read precision enhancement, has no description concerning an improvement in a method for treating image receiving pixels and displays reference colors on a color code.
[Patent Document 2] Japanese Patent No. 4241803 (DENSO WAVE INCORPORATED, Claims 1-2) that relates to one method for cell read precision enhancement, has no description concerning an improvement in a method for treating image receiving pixels and displays reference colors on a color code.
[Patent Document 3] PCT/JP2008/059885 = WO2009/144794 Al (GMG Color Technologies Co., Ltd. changed to Color Code Technologies Co., Ltd., Claims 1-2) that relates to one method for cell read precision enhancement, describes an improvement in a method for treating image receiving pixels and differs from the treatment method of the present invention.

[Non-Patent Documents]

[Non-Patent Document 1] Home Page of Microsoft Corporation entitled Microsoft Tag: A special cell shape is advocated as one method for cell read precision enhancement.

[Non-Patent Document 2] 2008 International symposium on Parallel and Distributed Processing with Applications: Development of novel finder pattern for effective color 2D-barcode detection; Edith Cowan University, Australia: This Document relates to one method for cell read precision enhancement and advocates displaying in a region separate from the record code region position judgment of record code, its cell size and its reference colors. However, since the cell size is not digitally, but really shown, it cannot be small-sized and record code density growth has its own limits. In addition, there is no description concerning an improvement in a method for treating image receiving pixels. In addition, the used colors are displayed on the color codes.

[Non-Patent Document 3] 2008 International symposium on Parallel and Distributed Processing with Applications: The Use of Border in Colour 2D Barcode; Edith Cowan University, Australia: This Document relates to one method for cell read precision enhancement, advocates attaching a color frame to around each cell. There is no description concerning an improvement in a method for treating image receiving pixels. In addition, the reference colors are displayed on the color codes.

[Non-Patent Document 4] Four-Bit Colour Models for 2D Colour Barcodes; Edith Cowan University, Australia: This Document advocates a color code using16 colors and capable of storing a great deal of information, and a 16-color combination method enabling the Euclidean distance to be maximized with spaces of luminance and chromaticity. There is no description concerning an improvement in a method for treating image receiving pixels.

[Summary of the Invention]

[Problems the Invention intends to solve]

As described above, the conventional two-dimensional color code is disadvantageous in that when it is intended to enhance the data record density on the code display medium, the decode precision is lowered and, therefore, has issues as means for recording electronic data with high density on a code display medium. Since the number of colors is up to 5 colors comprising two colors of black and white and three colors of red, green and blue and since a cell size of 0.5 mm or less is not used, record density is low. In addition, the method of displaying the reference colors around or inside the color codes and using the reference codes as standards for revising the used colors and judging the cell colors fails to serve as the standard because errors are induced in reading the used colors discolored and contaminated. Therefore, it is necessary to enlarge the color difference of the used colors and lessen the number of colors in order to eliminate the color judgment error. Thus, increasing the number of colors for a high record density code has its own limits. From this point of view, the code display of the used colors has issues as high-density record means.

[Means for solving the Problems]

In order to read and decode a two-dimensional color code, at first an image receiving apparatus, such as a digital camera, is used to image the two-dimensional color code on a code display medium. Dozens of several hundred of image receiving pixels exist in regions simulated to correspond to respective cells in the image receiving pixels in accordance with the performance of the image receiving apparatus. It is impossible to avoid color mixing in a region in the vicinity of a boundary of cells and thus in the cell boundary region, the image receiving pixels present with a color having mixed the colors used for the adjacent cells. When a cell size is large, a boundary mixing region has a small area ratio occupied in one entire cell. Therefore, a method for judging a cell color based on color information of a certain place of image receiving pixel in the cell has a small error, with the neighborhood of the boundary region ignored. However, when the cell size is made small in order to heighten the record density, the number of image receiving pixels allotted to the cells is reduced and, at the same time, the boundary color nixing region has a large area ratio occupied in one entire cell. The number of image receiving pixel regions in cells not affected by the boundary color mixing and having accurate color information is reduced and, therefore, it is important from the point of precision to measure what place of pixel.

Furthermore, when increasing the number of colors in order to further heighten the record density, (8 colors, for example, comprising white, black, red, green, blue added with yellow, red green (a synonym for magenta) and blue green (a synonym for cyan)), the color difference of colors used for cells becomes small. Therefore, the color regions for correct color judgment of the individual used colors capable of enduring discoloration become narrow to make it more and more difficult to maintain the decode precision. For this reason, it is more and more important to measure what places of image receiving pixels in the cells and adopt what kinds of treatments for the data. In the prior art, since the cell size is large and color number is limited, the color judgment precision has no large influence under measurements of whatever places of pixels in the cells. This means that pixel processing has not been devised.

The present invention devises the cell shape and sequence pattern to maintain high decode precision under the condition of small cell size and increase number of colors as conventionally and further devises a code system and a data processing method having considered the characteristics of the image receiving pixels acquired with the image receiving apparatus. To enable this, epoch-making devises for a method for specifying image receiving pixels used in cell color judgment and easy and highly precise acquisition of of information (including numerical information) necessary for carrying out the treatment have been created. The present invention will be described hereinafter.

Firstly, a two-dimensional color code is divided on a code display medium into two regions, i.e. a guide code portion and a data record code portion, and the former is a color code focusing on performing easy and high-precision position judgment and reading and the latter is a color code focusing on high record density.

Secondly, the guide code portion enables a region to be easily and accurately judged and decoded only with image analysis by color ingredient analysis using color information (RGB values, for example) of each pixel of an image receiving image including a two-dimensional color code region and, utilizing the position judgment or decode, aims at acquiring information, such as matrix-like cell number values of the data record code portion, (hereinafter referred to as the "premise information") necessary for judgment, decode or its time shortening of the position of the data record code portion. For this reason, the guide code portion fulfills a function as a mere mark or symbol having a discriminative shape or pattern and is characterized in that it is a code in which the premise information for performing judgment, decode or its time shortening is encoded. In addition, while the guide code portion demands "high decode precision" from its own property, the data record code portion differs in object from the guide code portion because it demands "high record density" based on cell size reduction or used color number increase. It is also a feature that the guide code portion and data record code portion are different codes having at least one difference of "shape", "cell number", "cell size" and "used color number". To be specific, in order to attain easy and accurate read with an ordinary image receiving apparatus equipped with the two portions, such as a digital camera of a mobile phone, from their respective properties, the guide code portion has a larger cell size concerning color information of the guide code and a smaller number of colors than the data record code portion and is determined as a different code system from the data record code.

A method for judging positions of the guide code portion and data record code portion may depend completely on judgment or decode of the position of the guide code and does not depend thereon, but may depend on image processing by color ingredient analysis using the color information (RGB values, for example) of each pixel of the image receiving image including the two-dimensional color code region. The color information stored in the guide code portion in relation to positioning is information necessary for a method for judging positions to be adopted, including the position of the guide code portion, the distance between and up and down and right and left positions of the guide code portion and the data record code portion, and endpoint position.

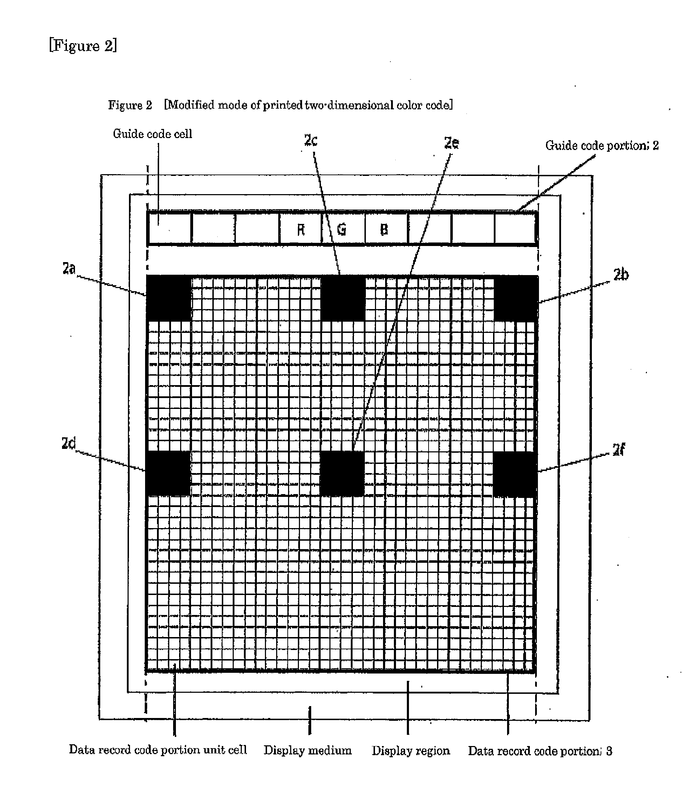

The region of the guide code portion may be independent of the region of the data record code portion. The region of the data record code portion having no depression may be provided with depression shown by any of reference numerals 2a to 2f in Figure 2, for example, or may be included like a floating island. That is to say, the region showing the position information of the guide code portion may be included in the region of the data record code portion.

In addition, postulate information for measuring and processing the image receiving image for decoding the data record code portion of the guide code portion includes, for example, matrix-like number of cells, cell size, redundancy level for detection and revision of error code, code division number, order of the division and code processing method. The guide code portion includes as its color information at least one numerical information of the above that includes at least the matrix-like number of cells. The color information used herein indicates the used colors of the cells of the guide code portion. By providing a read apparatus therein with a conversion table having the color information of the used colors (RGB values, for example) corresponding to the postulate information, the color information of the guide code portion can be converted into the postulate information.

Thirdly, the data record code portion can perform position judgment based on information obtained from judgment or decode of the position of the guide code portion. It is possible to judge the position of the data record code portion or limit a region used for judgment based on the relationship between the position of the guide code portion and the position of the data record code portion (constant positional relationship including, for example, that "the respective lengths of right and left both ends of the data record code portion and the guide code portion are always the same" and that "the data record code portion is positioned at a lower position separate by an interval the same as the vertical length of the guide code from the guide code"). As a result, the position of the data record code portion can easily be judged from the image receiving image including the two-dimensional color code region. Otherwise, since the region of the image receiving image performing position judgment can be restricted, the time of image processing according to color ingredient analysis using the color information of each pixel of the image receiving image can be shortened. It is possible to adopt a system in which the position of the data record code portion is not judged from the positional relationship between the guide code portion and the data record code portion. Also in this case, as conditions, by adopting a shape feature including a cell that constitutes the data record code portion, a code square (a synonym for four corners) colored with a chromatic color (color other than white), a quadrangle having an m long and n wide ratio or a quadrangle with a square as an apex and by providing the periphery of the data record code portion with a white frame of a width exceeding a constant width, it is possible to judge the position of the data record code portion. For example, by dividing the color information of each pixel of the image receiving pixels using the judgment of the data record code portion position into pixels of "white" and "a color other than white" and, when "white" = "0" and "colors other than white" = "1", setting "a quadrangular area constituted by an m long and n wide ratio of 1" = "the data record code portion", the position of the data record code portion can be judged. After the judgment of the position of the data record code portion, it is possible to obtain color information (RGB values, for example) of the image receiving pixels only at the data record code portion.

Next, since the color information of the image receiving pixels of the data record code portion is discolored by means of the discoloration causes including discoloration fading, print irregularity, illumination light and blots up to image receiving with the image receiving apparatus, the discolored colors are converted into the original and used colors allotted at the step of preparing the data record code portion. The color information (RGB values, for example) of the data record code portion imported as the image receiving pixels has different tendencies in discoloration depending on environments while each used color is discolored in the same direction as the tendencies. For example, the image received with the image receiving apparatus under dark illumination environments is blackish as a whole, and the image received under bright illumination environments is whitish as a whole. The positional relationship of the originally allotted colors in a color space is brought to a state colonized in a space toward the color in the direction. However, since it is discolored in the same direction, the respective pieces of color information of the image receiving pixels of each cell to which plural used colors are allotted has a high possibility of having similar color information even in the presence of color information variation resulting from discoloration. The position shown by the color information of each image receiving pixel in the color space, as the original used colors are separately set, has an entire tendency of easy separation into groups corresponding to the number of the used colors. In view of the above, quantization (the meaning thereof is defined below) the color information of each image receiving pixel is performed in concert with the number of the used colors and, based on the position of each group and the original positional relationship of the used colors, it is possible to judge that each group is the image receiving pixel to which originally what used colors are allotted. As a result, it is unnecessary to dispose the reference colors used in revision of discoloration around the two-dimensional color code or in color judgment. The meaning of the quantization used herein will be described. While the terminology quantization originates from quantum mechanics, it is used here as a more general meaning and indicates that the continuous quantity is represented by the discrete quantity. The color information of each pixel actually measured is the continuous quantity represented by the RGB values. The RGB values and the RGB values the original used colors have induce "declination" due to the cell discoloration or the characteristics of the image receiving apparatus and are not always in accord with each other. Generally, however, the RGB values are dispersed to values in the neighborhood of the RGB values of the original used colors. Therefore, the actually measured RGB values of each pixel are replaced with the RGB values of the original used colors located most adjacent thereto to use the replaced RGB values as the color information of their pixels. Therefore, the replaced pieces of color information are all unified into the color information of the original used colors. This is called quantization. A mathematic method of quantization comprises replacement with original used color values in a curtate distance of a vector distance or Euclidean distance in a three-dimensional space of the RGB values or comprises setting threshold values in the vicinity of the RGB values of the original used colors and replacing the actually measured values falling in the threshold values with the RGB values of the original used colors. Though there are other methods, in short, the replacement with the RGB values of the original used colors suffices. Incidentally, when the measured values include pixels having an abnormally long vector distance and exceeding the threshold values, the pixels may be eliminated as aberrant values. In this way, the color information of the image receiving pixels in the group is converted into the color information of the originally set used colors. As a result, the image receiving pixels of the data record code portion produce an image composed of only the pixels to which any of the color information of the used color is allotted.

In order to shorten the processing time, prior to the above processing, through reduction of the image receiving pixels that produce noise (a synonym for aberrant values) and reduction of the number of image receiving pixels to be quantized, the image receiving pixels may be aggregated into a single pixel through obtaining an average value of the color information (RGB values, for example) of each image receiving pixel every adjacent X by Y image receiving pixels. This is called a aggregation pixel hereinafter. The original used colors may be judged through quantization of the aggregation pixel.

One example of a method for converting color information of image receiving pixels into color information of used colors judged through quantization will be described hereinafter.

"Example"

At first, values the color information (RGB values, for example) of the image receiving pixels of the data record code portion shows are mapped in a space expressing the color information (hereinafter referred to as the "color space") and divided into groups of a number the same as the number of the used colors. Next, vector lines are drawn from respective center positions of all the groups toward positions the color information of each used color shows, a closest used color is found out on each vector line, the corresponding group is judged as a group belonging to the used colors, and the color information of the image receiving pixels in the group is converted into the color information of the belonging used colors. Otherwise, an intermediate pint between center positions of adjacent groups is obtained, and the used colors are judged, with the obtained value as a threshold value of the adjacent groups.

Next, the position of the image receiving pixel at the center position of each cell of the data record code portion is judged from the matrix-like number of the cells of the data record code portion read through the decode of the guide code portion. Since the cell center neighborhood is a portion little affected by a mixed color of the adjacent cells having different used colors, the color information of the image receiving pixels at that portion are judged as the used colors of the cell. Since the image receiving pixels at that time already have the color information of the used colors from the processing lines described in paragraphs [0023] and [0024], the color information is judged as the used color of the cell. Though the conventional method is a general method for judging boundaries, number and colors of cells through image analysis, such as histogram analysis, this method cannot allot the same color to adjacent cells. For this reason, it has been necessary to provide a boundary line between cells and devise cell arrangement and a color allotting method. It has also been necessary to allot the number of image receiving pixels many enough to distinguish noise and its feature to a single cell. In the method of the present invention, however, since the accurate matrix-like numbers of cells of the data record code portion have already been obtained through the decode of the guide code portion, based on the values and values of the matrix-like pixel numbers of the image receiving pixels obtained through the judgment of the position of the data record code portion, simple computation enables the pixels at the center position to be judged. In addition, prior to this processing line, since the processing lines in paragraphs [0023] and [0024] are taken, the image receiving pixels of the data record code portion already have relatively reliable color information of the used colors classified trough the reduction treatment of the image receiving pixels forming noise and through quantization and, therefore, the color information of the image receiving pixels judged as the center position can be judged as the color of the cell without modification.

When it has decided to first obtain the center position of each cell, the processing time can be shortened, in a state wherein restriction is made to the beforehand set number of pixels or aggregation pixels around the center position, through decision of the used colors or judgment of the used colors of the cells by means of the above quantization.

The conventional method does not beforehand grasp the longitudinal and lateral numbers of the cells of the date record code portion and judge the image receiving pixels at the center position. Even though the conventional method can attain the grasp and judgment, there are cases where some number of image receiving pixels constitute noises or remarkably discolored image receiving pixels. As in the present invention, in comparison with the color information of the image receiving pixels subjected to beforehand averaging treatment and classified into the used colors quantized based on more samples, use of the image receiving pixels alone not subjected to the beforehand treatment in judging colors comes to lack in accuracy. Otherwise, in order to complement misjudgment of noise or discoloration through selecting some image receiving pixels in the vicinity of the centered image receiving pixels and averaging the color information of each image receiving pixel, it is necessary to allot plural image receiving pixels to a single cell. In the data record code portion according to the present invention, it is unnecessary to provide a boundary line between cells even when the adjacent cells have the same color and devise cell arrangement and a color allotting method. Furthermore, in an extreme instance, even in the case of an image assumed when the number of image receiving pixels allotted to a cell of the data record code portion is only one, it is theoretically possible with high precision to decode the data record code portion through quantization between all the pixels, and a processing line for judging the color of a cell more accurately is devised.

One example of a computation method for judging the image receiving pixels at the center position of each cell will be described hereinafter.

"Example"

When the data record code portion constitutes an image composed of "longitudinal m pieces" by "lateral n pieces" of image receiving pixels and when the "longitudinal cell number = a" and "lateral cell number = b" of the data record code portion obtained through the decode of the guide code portion (the data record code portion composed of longitudinal a pieces by lateral b pieces of cells), established are the following formulae, in which suffix c denotes a cell and p a pixel, for obtaining "longitudinal Pp-th" and "lateral Qp-th" positions of the image receiving pixels corresponding to the centers of cells located at "longitudinal Nc-th" and "lateral Mc-th" positions.

$$Pp = (Nc - 1) \times (m \div a) + ((m \div a) \div 2)$$

$$Qp = (Mc - 1) \times (n \div b) + ((n \div b) \div 2)$$

Next, the used colors of each cell thus judged are converted into bit sequences. This conversion is made based on a conversion table beforehand disposed in a reader and having the color information of the used colors corresponding to the bit sequences. One example of the conversion table will be described.

"Example"

When converting each bit sequence with three bits into colors, for example, since the bit sequence has 8 patterns comprising "000", "001", "010", "011", "100", "101", "110" and "111", 8 colors are required as the used colors in order to convert the bit sequences into the different colors. Eight colors of red, green, blue, blue green, red green, yellow, black and white are used, for example, are allowed to correspond to the following, and to which distinguishing numbers are respectively allotted.

000 = red = 1, 001 = green = 2, 010 = blue = 3, 011 = blue green =4, 100 = red green = 5, 101 = yellow= 6, 110 = black = 7 and 111 = white = 8.

When expressing the color information of the used colors using the RGB values, for example, a correspondence table is shown hereinafter.

| No. | Bit sequence | Color | RGB values |
| --- | --- | --- | --- |
| 1 | 000 | Red | 255,0,0 |
| 2 | 001 | Green | 0,255,0 |
| 3 | 010 | Blue | 0,0,255 |
| 4 | 011 | Blue green | 0,255,255 |
| 5 | 100 | Red green | 255,0,255 |
| 6 | 101 | Yellow | 255,255,0 |
| 7 | 110 | Black | 0,0,0 |
| 8 | 111 | White | 255,255,255 |

By providing the reader therein in advance with, as a conversion table, information having the color information of the thus used colors corresponding to the bit sequences, the color information of the used colors of each cell judged can be converted into bit sequences.

Next, the bit sequences obtained from each cell are connected in accordance with the orders disposed in encoding to obtain encoded data. However, since there is a case where data converted through misjudgment of the cell color into partially errant bit sequence is obtained, in order to revise the error of the obtained data, data containing error revision code (a synonym for redundant code) is encoded beforehand in color-encoding the electronic data. By doing so, detection and revision of the bit sequence can be performed using the error revision code contained in the obtained data. However, the generally used error revision method has the limited number of errors to be revised though depending on an inclusion rate of the error revision code. When color judgment of the cell into which the error revision code is converted mistake, the error revision code per se constitutes erroneous data to possibly fail to fulfill the role thereof.

In the present invention, therefore, in case where an error cannot be revised with the data initially obtained and encoding cannot be performed, color information of image receiving pixels in the neighborhood of the adopted image receiving pixels (or at the position beforehand determined by N pieces on the right, left, top and bottom) in judging all or part of used colors of the cell is newly adopted as the used colors of the cell, and the same error detection and revision treatments as described above are again taken using the date converted into bit sequence of the used colors. When re-revision cannot be made, image receiving pixels at the next (or reverse neighbor, the order of which is set in advance) are adopted and the same treatments are made. This operation is repeated until the error can be revised, thereby enabling acquisition of the pit sequence mistaken from mischoice of the image receiving pixels adopted as the used colors of the cell to be revised.

Through the three processes from the above first to the third processes, averaging and quantization of the image receiving pixels, data error detection and revision, and treatment for shifting the position of the image receiving pixels at the time of revision incapability are performed. Through elimination and revision of errors or aberrant values, read precision of the data record code is enhanced and, at the same time, through the aggregation property and limitation property of the image receiving pixels the processing time can be shortened.

[Effects of the Invention]

Multicolor property of the color code and reduction property of the cell size which have conventionally been difficult to attain because of bad read code precision can drastically be attained while maintaining the read decode precision. Conventionally, the number of colors of the color code has been, for example, 5 at most and the minimal cell size has been around 0.5 mm. In the present invention, the number of colors is 8 or more and the cell size can be reduced to 0.3 to 0.1 mm though depending on the performance of the image receiving apparatus. For this reason, practically, the density of the data record code is increased by one digit and the data storage quantity per display area is dramatically increased.

[Brief Explanation of Drawings]

Figure 1 is a diagram showing a fundamental mode of a two-dimensional color code showing an embodiment.
Figure 2 is a diagram showing a deformation mode of a two-dimensional color code showing an embodiment.
Figure 3 is a configuration diagram entirely showing preparation of a two-dimensional color code and read decode in an embodiment.
Figure 4 is a configuration diagram showing an image receiving pixel, an aggregation pixel and a cell in an embodiment.

[Mode for carrying out the Invention]

(1) Preparation method and encoding method of two-dimensional color code

(1-1) Features of guide code and data record code

A guide code system uses high-precision position judgment and high-precision data decoding. The number of colors used, for example, is limited to 2 or 3 colors like black and white or RGB or CNY, through maintaining the color distance, the colors are unlikely affected by discoloration causes including discoloration fading, print irregularity, illumination light and blots and, through enlargement of a cell size, shapes and colors are easy to distinguish. Though the barcode or QR code having already had a good record may be used, it is not proper because a printing area is large or because consistency between a printing shape and a data record code shape is not obtained. It is one of methods to utilize a code system focusing on decode precision as described in JP 2008-27029 A disclosing transmission of binary data in order of a cell color line.

A data record code portion is a code system of high record density focusing on record efficiency in order to record electronic data and adopts an ordinary encoding method in which colors are allotted to a bit sequence. For this reason, it is ideal to use maximal color number usable in a range capable of maintaining target decode precision and reduce the cell size in a range capable of reproduction in printing. In actuality, 8 color of red, green, blue, blue green, red green, yellow, black and white are used, a printing cell size is bound by the performance of a image receiving apparatus rather than the printing performance and, in concert therewith, the cell size can be reduced to around 0.1 to 0.3 mm.

(1-2) Preparation method and encoding method of two-dimensional color code

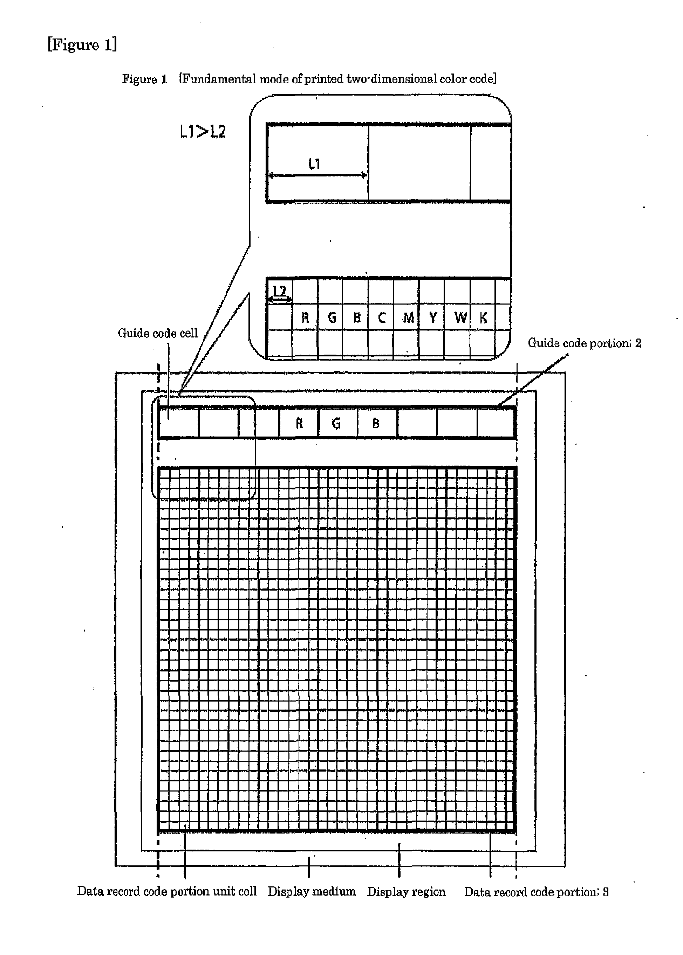

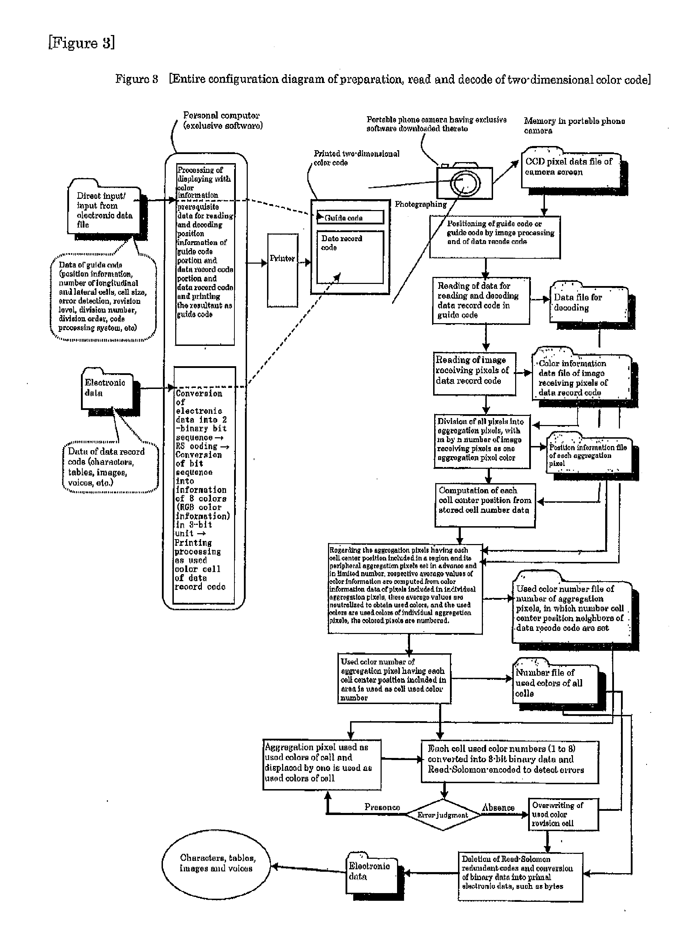

A guide code portion 2 shown in Figure 1 marks the spots of positional information of the two-dimensional color code (end point position, right, left, top and bottom, a distance between the guide code portion and the data record code portion, etc.), the number of longitudinal and lateral cells of the data record code portion, cell size, redundancy level, (error revision capacity level), the number of division of the two-dimensional color code, division order and a code processing method, and prints or displays on a display medium numerical data encoded as color information. As shown in Figure 3, these data are personally input directly using an exclusive encode software downloaded to a personal computer or may be input from the electronic data file. An encoding method comprises converting the input data into a binary bit sequence, making conversion into a used color corresponding in advance to bit information every unit of the bit number to be converted and printing or displaying the color information as a cell pattern color of the guide code portion on a code display medium.

Next, a data record code portion 3 shown in Figure 1 is disposed so as to enable location of the data record code portion, with the guide code portion as the standard to have constant positional relation. In the data record code portion 3, data including characters, tables, images and voices to be recorded as two-dimensional color codes are encoded with cells and printed. These data are input from the electronic data file by means of the exclusive encode software downloaded to the personal computer. An encoding method comprises converting electronic data into binary bit sequence, adding a redundancy bit necessary for a mathematical treatment for data error detection and revision at the time subsequent decoding, putting together the bit sequence in a unit of three bits, making conversion into numbers showing 8 used colors corresponding in advance to bit information every unit, converting the numbers showing the used colors into RGB data set in advance to correspond to the used colors, and printing or displaying the color information as each cell color of the data record code portion on a code display medium.

The relationship between the binary bit sequence (a synonym for binary data) and the used color will be described a little more. When converting each bit sequence with three bits into colors, for example, since the bit sequence has 8 patterns comprising "000", "001", "010", "011", "100", "101", "110" and "111", 8 colors are required as the used colors in order to convert the bit sequences into the different colors. Eight colors of red, green, blue, blue green, red green, yellow, black and white are used, for example, are allowed to correspond to the following, and to which distinguishing numbers are respectively allotted.

000 = red = 1, 001 = green = 2, 010 = blue = 3, 011 = blue green =4, 100 = red green = 5, 101 = yellow= 6, 110 = black = 7 and 111 = white = 8.

When expressing the color information of the used colors using the RGB values, for example, a correspondence table is shown hereinafter.

| No. | Bit sequence | Color | RGB values |
| --- | --- | --- | --- |
| 1 | 000 | Red | 255,0,0 |
| 2 | 001 | Green | 0,255,0 |
| 3 | 010 | Blue | 0,0,255 |
| 4 | 011 | Blue green | 0,255,255 |
| 5 | 100 | Red green | 255,0,255 |
| 6 | 101 | Yellow | 255,255,0 |
| 7 | 110 | Black | 0,0,0 |
| 8 | 111 | White | 255,255,255 |

Target electronic data are not as-is code-converted in order to enhance the record efficiency and may be compressed with an ordinary compression technique, such as ZIP, LZH, etc.

Since compressed file bit number ÷ 3 = necessary cell number, line feeds are inserted every cell number computed from round away from zero of the power root of the necessary cell number to make up the data record code so that printing of the data record code portion is shown in principle as the same cell number by the same cell number.

(2) Read method and decoding method of two-dimensional color code

Read of printed two-dimensional color code and decoding method of color information will be described with reference to Figure 3. As shown in Figure 3, read and decoding of the two-dimensional color code are performed with exclusive digital software downloaded to an image receiving apparatus, such as a digital camera.

At first, a person displays on the screen of an image receiving apparatus, such as a digital camera or scanner two-dimensional color code shown on a display medium, substantially decide the position thereof, taking a photo of the entire two-dimensional color code, and importing color information of an area including the two-dimensional color code as a image of an imaging device, such as CCD. The two-dimensional color code is provided about it with a white background frame of some mm to make it easier to judge an automatic position. An accurate position of the guide code portion region is first judged through color ingredient analysis of the imported CCD image and, with the judgment as the standard, judgment of the position of the data record code portion region can accurately be made. The actual position judgment method may be a method depending wholly on color and shape information the guide code portion has or depending on an ordinary image processing (binarization, expansion processing, contour detection, polygon processing, extraction of the guide code region and data record code region).

In addition, a method for read and decoding of information other than position judgment information stored in the guide code portion may be any of methods having code read system in which the cell of the guide code portion has a small number of colors and large cell size and decoding is easy to perform with high precision and insofar as the shape and size are not improper for the data record code. It is one of the methods to utilize the code system focusing on code precision as in JP 2008-27029 A.

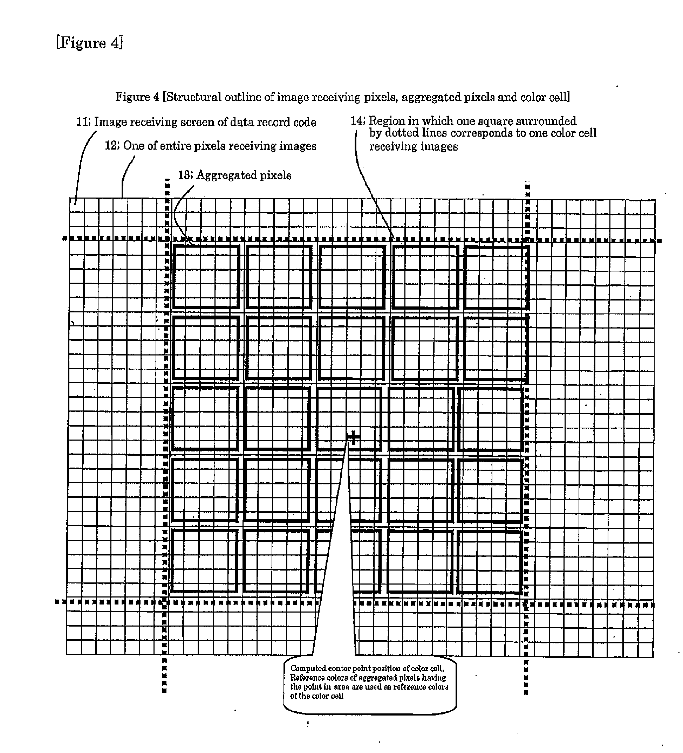

RGB color ingredient data of CCD image receiving pixels (11 in Figure 4 and its aggregate 12 in Figure 4), the position of which is thus judged accurately, is stored as a file in a memory of the digital image receiving apparatus. All pixels are divided into aggregation pixels, with longitudinal m by lateral n image receiving pixels as a single aggregation pixel (13 in Figure 4. Next, the center position of each cell on the data record code screen is computed from longitudinal and lateral cell number data obtained from the color information of the guide code. Regarding the aggregation pixels having each cell center position included in a region and its peripheral aggregation pixels set in advance and in the limited number, respective average values of the R, G and B values of the longitudinal m by lateral n number of pixels included in the individual aggregation pixels are computed, these average values are obtained with respect to the entire aggregation pixels of the data record code and, since mapping in an RGB color space induces 8 separate groups, the original 8 used colors are imputed through quantization of each aggregation pixel to judge the color of each aggregation pixel. Otherwise, the average values of the R, G and B values of the used colors having values closest to the average values of the aggregation pixels are quantized without being grouped to obtain used colors having the quantized RGB values. For example, assuming that RGB values of longitudinal m by lateral n pixels (A, B, C, D, E, F, ....) are shown as:

A (R255, G010, B004)
B (R245, G006, B002)
C (R250, G020, B020)
D (R239, G000, B000)
E (R248, G013, B014)
F (R251, G003, B006)
G (R254, G010, B001)
H (R255, G002, B000)
I (B255, G001, B004)
.
.
.

and assuming that their average values are (R250.2, G7.2 B5.6), the average value is quantized as the color closest to the color ingredients (a synonym for color information) of red, green, blue, blue green, red green, yellow, black and white determined in advance as the used colors to produce (R255, G000, B000) and enable its used color to be specified.

The specified used colors are used as used colors of the aggregation pixels. Number data showing used colors corresponding to the used colors are obtained, and these numbers are stored in a memory as the numbers showing the used colors of the aggregation pixels. The averaging and quantization are one of the processes for loosening up and eliminating errors or aberrant values of the image receiving pixel data. Simultaneously, the aggregation of the image receiving pixels and limitation of the aggregation pixels enables the processing time to be shortened.

To the aggregation pixels having the center position of each cell disposed in a region, numbers showing the used colors are encoded as the used colors of the cell (14 in Figure 4). In this way, the used colors of all the cells and numbers showing the used colors are determined. These are stored in a memory as a file.

Conversion into 3-bit binary data is made using the correspondence table having mounted thereon the numbers showing the used colors of all the cells. The ordinary mathematical method for data error detection and revision, such as the Reed-Solomon method, added when the electronic data have been binary-encoded when preparing the two-dimensional color code is here used to examine errors and, if any, revise the errors. When the errors cannot be revised, by using as the numbers showing the used colors of the cells the numbers showing the used colors of the aggregation pixel adjacent (a pattern for shifting to the right, left, top and bottom has in advance set) to the aggregation pixel adopted as used cells of the cell and using the above same error detection and revision method, the error detection and revision (hereinafter referred to as "decode of the error revision system") are performed. When it is impossible to perform the decoding of the error revision system, the same processing is performed using the aggregation at the next (or reverse neighbor, the order of which is set in advance). The processing is repeated until the error revision system can be decoded. When the decoding of the error revision system has been completed, encoded binary data can be obtained. When the binary data are converted into primal electronic data, such as bytes, the primal electronic data including documents, images, voices, etc. can be reproduced.

[Industrial Applicability]

By performing reading with a digital camera of a mobile phone even using a small color code printed into a stamp size, for example, it becomes possible to momentarily reproduce a great number of documents, images, voices, etc. without going through the communication circuit. Hence, various aspects of social contribution to the item description by means of documents, images, voices, etc. traceability, security, vocalization for people with visual impairment can be expected.

[Explanation of Reference Numerals]

1: Two-dimensional color code (guide code and record code)
2: Guide code
3: Data record code
11: Image receiving pixels of the data record code
12: All pixels receiving images
13: Aggregated pixels

**Claims**

1. In a two-dimensional color code in which multicolor cells have been expanded and which comprises a guide code portion of a code system capable of positioning a two-dimensional color code region and reading and decoding data with ease and with high precision and a data record code portion using at least smaller cells than the guide code portion so as to enable electronic data to be recorded with high density, a two-dimensional color code preparation method comprising:

   causing the guide code portion to have as pieces of numerical information at least one data of longitudinal and lateral numbers of cells, a cell size, a data error detection and revision level, a code division number, a code division order and a code processing method, which are preconditions for reading and decoding the data record code portion; and
   encoding the pieces of numerical information as colors.

2. A two-dimensional color code preparing, reading and encoding method according to claim 1, comprising:

   adding the longitudinal and lateral numbers of cells of the data record code portion as one of data of the guide code portion;
   reading the numbers of cells with an image receiving apparatus including a digital camera to obtain the numbers as pieces of numerical information, thereby performing computation processing with a mathematical formula using the longitudinal and lateral numbers of cells and longitudinal and lateral numbers of pixels of the data record code portion and obtaining positions of the pixels at center positions of the cells of data record code portion;
   performing quantization, with color information (RGB values, for example) of a set number of image receiving pixels at or around the center positions and original color information set in respect of used colors confronted, to obtain color information; and
   judging the obtained color information as kinds of colors of the cells.

3. A two-dimensional color code reading and encoding method according to claim 2, comprising:

   aggregating all image receiving pixels of the data record (aggregation pixels) as one virtual pixel in a unit of optionally set longitudinal m by lateral n numbers of pixels;
   using an average value or quantized value of color information of the m by n pieces of pixels in each aggregation pixel as color information;
   quantizing an aggregation pixel having each cell center position included in a region or color information of a set number of aggregation pixels near the center position to obtain color information; and
   judging the obtained color information as the kinds of colors of the cell.

4. A two-dimensional color code reading and encoding method according to claim 2 or 3, comprising:

   in case where decoding processing (error detection and revision) by an error revision system used to detect and revise errors of codes (bit sequences) by means of errors of judgment of used colors of a cell of the data record code portion has failed to perform,
   judging color information of pixels or aggregation pixels at different position set in advance from the pixels or aggregation pixels used for the judgment of the colors of the cell as used colors of the cell;
   using a bit sequence corresponding to the used colors to again perform decode processing by means of a detection and revision system; and
   repeating decoding processing by the error detection and revision system while shifting in accordance with a beforehand set system pixels or aggregation pixels used for judgment of the used colors of the cell until decoding by the error revision system is enabled or beforehand set number of times.

**5.** A two-dimensional color code preparing, reading and encoding method according to claim 1, comprising:

performing quantization comparing color information of used colors of a beforehand determined cell with color information of image receiving pixels or its processed color information without printing or displaying reference colors on a two-dimensional color code region in order to judge used colors of cells of the data record code portion, thereby obtaining color information; and

judging the obtained color information as the used colors of the cells.

[Figure 1]

Figure 1 [Fundamental mode of printed two-dimensional color code]

L1>L2

L1

L2

R G B C M Y W K

Guide code cell

Guide code portion; 2

R G B

Data record code portion unit cell   Display medium   Display region   Data record code portion; 3

[Figure 2]

Figure 2 [Modified mode of printed two-dimensional color code]

Guide code cell

2c

2e

Guide code portion; 2

R G B

2a

2b

2d

2f

Data record code portion unit cell    Display medium    Display region    Data record code portion; 3

[Figure 3]

Figure 3 [Entire configuration diagram of preparation, read and decode of two-dimensional color code]

Personal computer (exclusive software)

Portable phone camera having exclusive software downloaded thereto

Memory in portable phone camera

Printed two-dimensional color code

CCD pixel data file of camera screen

Direct input/ input from electronic data file

Processing of displaying with color information prerequisite data for reading and decoding position information of guide code portion and data record code portion and data record code and printing the resultant as guide code

Guide code

Date record code

Photographing

Positioning of guide code or guide code by image processing and of data recode code

Data of guide code (position information, number of longitudinal and lateral cells, cell size, error detection, revision level, division number, division order, code processing system, etc)

Printer

Reading of data for reading and decoding data record code in guide code

Data file for decoding

Reading of image receiving pixels of data record code

Color information data file of image receiving pixels of data record code

Electronic data

Conversion of electronic data into 2-binary bit sequence → RS coding → Conversion of bit sequence into information of 8 colors (RGB color information) in 3-bit unit → Printing processing as used color cell of data record code

Division of all pixels into aggregation pixels, with m by n number of image receiving pixels as one aggregation pixel color

Position information file of each aggregation pixel

Data of data record code (characters, tables, images, voices, etc.)

Computation of each cell center position from stored cell number data

Regarding the aggregation pixels having each cell center position included in a region and its peripheral aggregation pixels set in advance and in limited number, respective average values of color information are computed from color information data of pixels included in individual aggregation pixels, these average values are neutralized to obtain used colors, and the used colors are used colors of individual aggregation pixels, the colored pixels are numbered.

Used color number file of number of aggregation pixels, in which number cell center position neighbors of data recode code are set

Used color number of aggregation pixel having each cell center position included in area is used as cell used color number

Number file of used colors of all cells

Aggregation pixel used as used colors of cell and displaced by one is used as used colors of cell

Each cell used color numbers (1 to 8) converted into 8-bit binary data and Reed-Solomon-encoded to detect errors

Presence — Error judgment — Absence

Overwriting of used color revision cell

Characters, tables, images and voices

Electronic data

Deletion of Reed-Solomon redundant codes and conversion of binary data into primal electronic data, such as bytes

[Figure 4]

Figure 4 [Structural outline of image receiving pixels, aggregated pixels and color cell]

11; Image receiving screen of data record code

12; One of entire pixels receiving images

13; Aggregated pixels

14; Region in which one square surrounded by dotted lines corresponds to one color cell receiving images

Computed center point position of color cell. Reference colors of aggregated pixels having the point in area are used as reference colors of the color cell

**INTERNATIONAL SEARCH REPORT**

| International application No. |
| --- |
| PCT/JP2011/054794 |

A. CLASSIFICATION OF SUBJECT MATTER
*G06K19/06*(2006.01)i, *G06K1/12*(2006.01)i, *G06K7/10*(2006.01)i, *G06K7/12*(2006.01)i

According to International Patent Classification (IPC) or to both national classification and IPC

B. FIELDS SEARCHED

Minimum documentation searched (classification system followed by classification symbols)
G06K19/06, G06K1/12, G06K7/10, G06K7/12

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A<br><br>A | JP 2009-289066 A (B-Core Inc.),<br>10 December 2009 (10.12.2009),<br>paragraphs [0001] to [0030], [0066] to [0130];<br>fig. 1 to 2<br>(Family: none)<br><br>WO 2006/009300 A1 (Matsushita Electric<br>Industrial Co., Ltd.),<br>26 January 2006 (26.01.2006),<br>page 2, lines 5 to 15; page 3, line 13 to<br>page 9, line 5; fig. 1 to 6, 9 to 10<br>& US 2006/0274952 A1      & EP 1770604 A1<br>& KR 10-2006-0095901 A   & CN 1839398 A | 1,5<br>2-4<br><br><br>2-4 |

☒ Further documents are listed in the continuation of Box C.　　☐ See patent family annex.

| | |
| --- | --- |
| * Special categories of cited documents:<br>"A"　document defining the general state of the art which is not considered to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search<br>　24 March, 2011 (24.03.11) | Date of mailing of the international search report<br>　05 April, 2011 (05.04.11) |
| --- | --- |
| Name and mailing address of the ISA/<br>　Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2011/054794 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2006-178692 A  (AdIn Research, Inc.), 06 July 2006 (06.07.2006), paragraphs [0013], [0046] to [0075]; all drawings (Family: none) | 2-4 |
| A | JP 2007-323632 A  (Konica Minolta Systems Laboratory, Inc.), 13 December 2007 (13.12.2007), paragraphs [0001] to [0030]; all drawings & US 2007/0278303 A1 | 2-4 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3996520 B
- JP 4241803 B
- JP 2008059885 W
- WO 2009144794 A1
- JP 2008027029 A